Europäisches Patentamt

European Patent Office

Office européen des brevets

(11) Publication number: **0 110 827**
**A1**

(12) **EUROPEAN PATENT APPLICATION**

(21) Application number: **83810526.0**

(22) Date of filing: **16.11.83**

(51) Int. Cl.³: **G 03 B 27/18**

(30) Priority: **26.11.82 JP 206029/82**

(43) Date of publication of application: **13.06.84**
**Bulletin 84/24**

(84) Designated Contracting States: **CH DE FR GB IT LI NL**

(71) Applicant: **Sanwa Co., Ltd., 8-8-6, Ginza Chuo-ku, Tokyo (JP)**
Applicant: **Fuji-Kiden Mfg.Co., Ltd., 1-5-8 Matsue Edogawa-ku, Tokyo (JP)**

(72) Inventor: **Shibata, Masao, c/o Sanwa Co., Ltd. 8-8-6, Ginza, Chuo-ku Toyko (JP)**

(74) Representative: **White, William et al, PATENTANWALTS-BUREAU ISLER AG Postfach 6940 Walchestrasse 23, CH-8023 Zürich (CH)**

(54) **A thermal copying machine.**

(57) A thermal copying machine is disclosed, which comprises a main body (10) provided with an original-setting plate (12), two pairs of vertically movable supporting devices (18) mounted on corners of said setting plate (12), an original-pressure plate (16) supported horizontally by said supporting devices (18) above the setting plate (12), each of said supporting devices (18) comprising a transmitting shaft connected at its either end with a right-handed worm (44) and a left-handed worm (46) and connected with a rotary driving source (28), a pair of crank mechanisms (26) connected through a worm wheel (34) to either end of said transmitting shaft and a pair of slide plates (24) for vertically moving relative to said setting plate (12) through said crank mechanisms (26).

- 1 -

## A Thermal Copying Machine

This invention relates to a thermal copying machine, more particularly to the improvement in a setting plate of the copying machine for originals to be copied.

There has hitherto been known a thermal copying machine of flash type capable of rapidly copying originals, such as printings, writings, drawings and photo-prints, on a heat-sensitive copying paper by means of a thermal printing technique.

According to such thermal copying machine, an original is set on an original-setting plate together with a heat-sensitive sheet on which the original is copied. In this case, quality of the copy depends on adhesion of the original to the heat-sensitive sheet, or uniformity of temperature distribution over the heat-sensitive sheet.

The known thermal copying machine of flash type comprises an irradiation window of a size corresponding to the original. The whole surface of the original on the setting plate is exposed to a single flash from a discharge tube for copying. Although the copying operation may be completed within a very short time, a considerably higher pressure is required generally for applying a uniform and higher pressure on a unit area of relatively wide surface, and therefore the pressure to be applied becomes higher as a size of the original is larger. Further, the larger size of the original makes it difficult to apply the uniform and higher pressure thereon. On the other hand, a predetermined radiant energy is needed on a unit area of the original for thermal copying, and consequently a larger area of the original to be exposed to a single flash must receive a larger amount of radiant energy at one time from a light source, thereby to necessitate a large number of discharge tubes of high power and a large capacitor, resulting in an enlarged apparatus and an increased manufacturing cost.

In view of the foregoing, there has been proposed a divisional exposure apparatus capable of reducing the total pressure onto a stack of the original with the heat-sensitive sheet upon a single exposure and decreasing the radiant energy for the single exposure, in which the stack may be divisionally exposed to the flash and only the exposed area of the stack may be subjected to the pressure for achieving adhesion between the original and the heat-sensitive sheet.

However, such type of divisional exposure apparatus must be provided with a feeder for selectively feeding the heat-sensitive sheet between a light-transmitting plate to be irradiated from the light source and a pressure plate opposite to the light-transmitting plate, so that a mechanism or a controller must be complicated in its structure for properly controlling the feeder and must utilize a longer exposure time.

As a result of diligent study for overcoming all problems of the conventional thermal copying machines, it has now been found out that the disadvantages as described hereinabove may be eliminated and the higher pressure may be achieved with a simple construction in that the original-pressure plate above the original-setting plate is horizontally supported at its corners by a vertically movable supporting device having a slide plate which is vertically movable through a worm shaft connected to a single driving source and a worm wheel, as well as a crank mechanism consisting of a pair of crank arms foldable connected each other.

Accordingly, an object of the invention is to provide a thermal copying machine of a simple construction, which may be readily manufactured and may apply a uniform and higher pressure onto a heat-sensitive sheet placed on an irradiation face of the copying machine.

The object of the invention may be achieved by the thermal copying machine, which comprises a main body provided with an original-setting plate, a pair of vertically movable supporting devices mounted on corners of said setting plate, an original-pressure plate supported horizontally by said supporting devices above the setting plate, each of said supporting devices comprising a transmitting shaft connected as its either end with a right-handed worm and a left-handed worm and connected with a rotary driving source, a pair of crank mechanisms connected through a worm wheel to either end of said transmitting shaft for vertically moving said pressure plate relative to said setting plate through said crank mechanisms.

In the thermal copying machine according to the invention, each crank mechanism of the supporting device preferably comprises a pair of crank arms foldably connected each other an opposite pair of said crank arms being connected with a common supporting shaft which is provided with the worm wheel meshed with the right-handed or left-handed worm of the transmitting shaft.

Further in accordance with the invention, the crank arm connected to the supporting shaft is preferably provided with limit switches for detecting the upper and the lower positions of the slide plate forming said supporting device through the folding movement of the crank mechanism.

One way of carrying out the invention will be described in detail hereinbelow with reference to the drawings which illustrate preferred embodiments, in which:

Figure 1 is a sectional front view of a main portion of a thermal copying machine according to the invention, showing a sectional view taken along the line A-A of Fig.2; Figure 2 is a sectional plan view of the thermal copying machine of Fig.1, but excluding an original pressure plate; and

Figure 3 is a schematic view illustrating arrangement of a light source for the thermal copying machine of Fig.1.

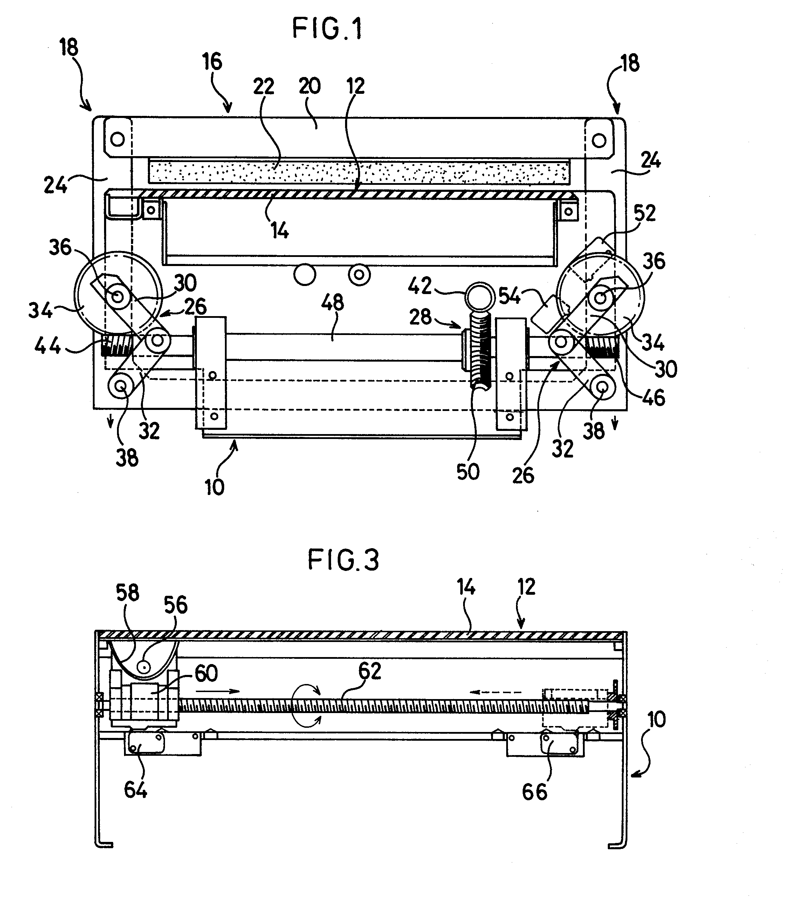

Figures 1 to 3 are partial sectional views showing an embodiment of the thermal copying machine according to the invention. Referring to Fig.1, a main body 10 at its upper surface is provided with an original-setting plate 12 for placing and setting an original and a heat-sensitive sheet. The setting plate 12 comprises an irradiation plate 14 of a transparent material, such as glass or the like. Within the main body 10 is arranged a light source, such as a xenon lamp, which is movable in the predetermined direction. Above the setting plate 12 is arranged an original-pressure plate 16 which is supported on four corners of the main body 10 by vertically movable supporting devices 18, 18. The pressure plate 16 should apply a high pressure up to approximately $200g/cm^2$ onto the whole area of the setting plate 12. For this purpose, the pressure plate 16 comprises a base plate 20 of a tough material and a cushion element 22 provided under the base plate.

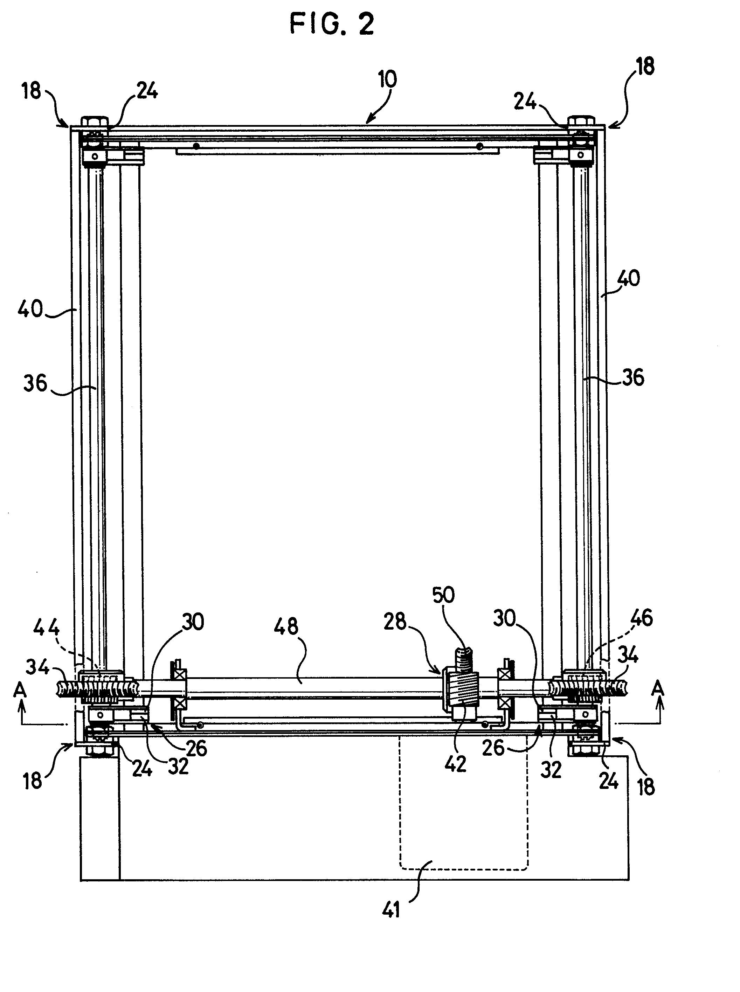

As illustrated in Figs.1 and 2, a pair of the supporting

- 5 -                          0110827

devices 18, 18 for the pressure plate 16 are arranged symmetrically, each comprising a slide plate 24, a crank mechanism 26 and a driving means 28. The slide plate 24 extends along an outer side wall of the main body 10 and its upper end if fixed to the base plate 20 of the pressure plate 16 while its lower end is pivoted to the crank mechanism 26 in the main body 10. The crank mechanism 26 comprises a pair of crank arms 30, 32 which are foldably and stretchably connected each other. One crank arm 30 is fixed to a supporting shaft 36 through a worm wheel 34 associated with the driving means 28, while the other crank arm 32 is secured to a lower end of the slide plate 24 through a rotary shaft 28 for vertically moving the slide plate 24 responsive to said pair of crank arms 30, 30. The driving means 28 comprises a motor 41 arranged on one side of the main body 10, a worm 42 mounted to an output shaft of the motor, a transmitting shaft 48 provided at its either end with a right-handed worm 44 and a left-handed worm 46, and a worm wheel 50 fixed to the transmitting shaft 48 and meshed with the worm 42. The right- and left-handed worms 44, 46 are meshed with the worm wheels 34, 34 on the shafts 36, 36 for connecting said pair of the crank arms 30, 30.

Thus, in the supporting devices 18, 18 for the pressure plate 16, rotary movement of the worm 42 generated by the motor 41 in the predetermined direction is transmitted to the crank arms 30, 30 through the worm wheel 50 → the transmitting shaft 48 → the right- and left-handed worms 44, 46 → the worm wheels 34, 34 → the shafts 36, 36. Thus, the turning or stretching movement of the crank arms 30, 30 on the shaft 36 relative to the other crank arms 32, 32 may lower the slide plates 24, 24 through the crank arm 32 and the rotary shaft 38, thereby to urge the pressure plate 16 onto the setting plate 12 with its horizontal attitude being maintained. In this case, when the crank mechanism of the pair of crank arms 30, 32 reaches the lower dead point, the maximum pressure of the pressure plate 16 is applied onto the setting plate 12. Reversely, the folding movement of the crank arms 30, 30 on the shaft 36 relative to the other crank arms 32, 32 raises the slide plates 24, 24 through the crank arm 32 and the rotary shaft 38, thereby to lift the pressure plate 16 apart from and above the setting plate 12. In order to define the lower and the upper limits of the pressure plate 16, limit switches 52, 54 for detecting the upper and lower position may be provided in the vicinity of the crank arm 30.

Figure 3 shows a light source of the thermal copying machine according to one embodiment of the invention. The light source comprises a xenon lamp 56 and a reflector 58 for uniformly directing a light from the xenon lamp 56 to the irradiation plate 14 both mounted on a supporting element 60 which may be slided horizontally, as shown with an arrow, by means of a screw 62. Thus, the light source allows the supporting element 60 to move at the predetermined velocity in harmony with a pressure timing of the pressure plate 16 onto the setting plate 12 and allows the xenon lamp 56 to flash a number of times at the predetermined intervals, thereby to effect the uniform thermal copying on the heat-sensitive sheet. For the movement of the light source, limit switches 64, 66 for detecting positions may be provided, corresponding to either end of the supporting element 60.

It will be appreciated from the foregoing that the thermal copying machine according to the invention may achieve the uniform and strong pressure action on the setting plate 12 of the main body 10 by holding the pressure plate 16 at its four corners by means of a pair of the supporting devices 18 having the same construction, and moving the supporting devices 18 vertically at the same timing. Thus, in accordance with the invention the thermal copying operation may be automated by employing an electric motor as the driving means

- 7 -                    0110827

and the automated printing system may be readily achieved in combination with a printing machine. Further, the thermal copying machine according to the invention is simple in its construction, leading to convenient manufacturing and reduction of the manufacturing cost. Especially, the supporting device for the pressure plate used in the thermal copying machine according to the invention may transmit the moving force through the transmitting shaft having at its either end the right- and the left-handed worms and thus may balance the thrust force acted on the transmitting shaft in the reverse direction, thereby to achieve convenient support of the transmitting shaft, removal of frictional loss of the thrust force and considerably improved transmission efficiency.

Although the invention has been described hereinabove with the preferred embodiments, it will be appreciated that many variations and modifications may be made without departing from the spirit and the scope of the invention.

0110827

Claims:

1. A thermal copying machine which comprises a main body (10) provided with an original-setting plate (12), a pair of vertically movable supporting devices (18) mounted on corners of said setting plate (12), an original-pressure plate (16) supported horizontally by said supporting devices (18) above the setting plate (12), each of said supporting devices (18) comprising a transmitting shaft connected at its either end with a right-handed worm (44) and a left-handed worm (46) and connected with a rotary driving source (28), a pair of crank mechanisms (26) connected through a worm wheel (34) to either end of said transmitting shaft for vertically moving said pressure plate relative to said setting plate (12) through said crank mechanisms (26).

2. A thermal copying machine according to claim 1, wherein each crank mechanism (26) of the supporting device (18) comprises a pair of crank arms (30, 32) foldably connected each other, an opposite pair of said crank arms (30) being connected with a common supporting shaft (36) which is provided with a worm wheel (34) meshed with the right-handed or left-handed worm (44, 46) of the transmitting shaft (48).

3. A thermal copying machine according to claim 2, wherein the crank arm (30) connected to the supporting shaft (36) is provided with limit switches (52, 54) for detecting the upper and the lower positions of the slide plate (24) forming said supporting device through the folding or stretching movement of the crank mechanism.

**FIG.1**

**FIG.3**

FIG. 2

## European Patent Office

## EUROPEAN SEARCH REPORT

# DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 157 870 (W.E. ROBERTS)<br>* Columns 2,3; figure 2 * | 1 | G 03 B 27/00 |
| A | DE-C- 513 505 (RADEBEULER MASCHINENFABRIK A. KOEBIG)<br>* Pages 1,2; figure 1 * | 1 | |
| A | DE-C- 184 251 (OTTO LIENEKAMPF)<br>Pages 1,2; figure 1 * | 1 | |
| A | DE-A-2 202 156 (FICHTEL & SACHS)<br>* Pages 14,15; figures 6,9 * | 1 | |
| A | US-A-2 507 556 (H. BOBST)<br>* Columns 1-3; figure 1 * | 1 | TECHNICAL FIELDS SEARCHED (Int. Cl. ³) |
| A | DE-C- 15 443 (MARSHALL STONEHOUSE)<br>* Pages 1-3; figures 1-10 * | 1 | G 03 B 27/00<br>G 03 B 27/02<br>G 03 B 27/04<br>G 03 B 27/18<br>B 30 B 1/10<br>B 30 B 1/14 |

The present search report has been drawn up for all claims

| Place of search<br>THE HAGUE | Date of completion of the search<br>05-03-1984 | Examiner<br>BOEYKENS J.W. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82